# EUROPÄISCHE PATENTSCHRIFT

(11) **EP 3 153 381 B1**
(45) Veröffentlichungstag und Bekanntmachung des Hinweises auf die Patenterteilung: **14.03.2018**
(21) Anmeldenummer: 15188768.4
(22) Anmeldetag: 07.10.2015
(51) Int. Cl.: B62D 5/00, B62D 15/02

(54) **LENKKOPF FÜR EINEN DREHBAREN LENKWINKELGEBER**
STEERING HEAD FOR AN ANGLE SENSOR OF THE ROTATING DIRECTION.
TETE DE DIRECTION POUR UN CAPTEUR D'ANGLE DE DIRECTION ROTATIF

(43) Veröffentlichungstag der Anmeldung: 12.04.2017
(73) Patentinhaber: Jungheinrich Aktiengesellschaft, 22047 Hamburg (DE)
(72) Erfinder: Herschel, Jan, 23843 Bad Oldesloe (DE); Andreeßen, Uwe, 22417 Hamburg (DE)
(74) Vertreter: Hauck Patentanwaltspartnerschaft mbB

(56) Entgegenhaltungen:
- EP-B1- 1 330 630
- JP-A- S 598 564
- JP-A- H09 304 048
- US-A- 4 988 219

## Beschreibung

Die vorliegende Erfindung betrifft einen Lenkkopf für einen drehbaren Lenkwinkelgeber an einem Flurförderzeug.

Ein Lenkkopf für einen drehbaren Lenkwinkelgeber an einem Flurförderzeug erlaubt beispielsweise ein Lenkrad oder einen sonstigen drehbaren Lenkwinkelgeber zu betätigen, um ein oder mehrere gelenkte Räder an dem Flurförderzeug in die gewünschte Richtung zu lenken. Es ist bei Flurförderzeugen bekannt, das gelenkte Rad mittels einer elektrischen Lenkung zu lenken, bei der das Lenkrad mit einer Sensorik ausgestattet ist, welche seine Lenkbewegungen an die Lenksteuerung übermittelt. Hierbei werden die Lenkbewegungen des Lenkwinkelgebers elektronisch erfasst und als elektronische Signale an eine Lenksteuerung übermittelt. Die Lenksteuerung treibt einen elektrischen Antrieb an, welcher das gelenkte Rad in seiner Winkelstellung entsprechend der Bewegung des Lenkrads bewegt.

Aus EP 1 330 630 B1 ist ein Wälzlager für Lenkräder gemäß dem Oberbegriff des Anspruchs 1 bekannt, das mit einem Sensor ausgestattet ist. Der Lenkkopf besitzt hierbei ein einreihiges Kugellager, das zentral eine Lenkwelle lagert. Die Lenkwelle besitzt auf einer Stirnseite Befestigungsbohrungen zur Verbindung mit einem Lenkrad. An der gegenüberliegenden Seite besitzt der Lenkkopf Permanentmagnete, über die eine Drehbewegung von einem magnetischen Sensor erfasst werden kann. Das hierbei auftretende Lenkmoment ist sehr gering und wird im Wesentlichen von der Wellendichtung am Kugellager aufgebracht.

In der Vergangenheit wurde festgestellt, dass die Bediener einer elektrischen Lenkung an einem Flurförderzeug sehr sensitiv auf das einer Lenkbewegung des Lenkwinkelgebers entgegenwirkende Lenkmoment reagieren. Aufgrund von Bauteiltoleranzen oder Verschleiß an der Wellendichtung kann das Lenkmoment während der Lebensdauer der Lenkung schwanken und den Fahrer so irritieren.

Der Erfindung liegt die Aufgabe zugrunde, mit möglichst einfachen Mitteln einen Lenkkopf zur Verfügung zu stellen, der ein vordefiniertes und über die Zeit konstantes Lenkmoment für eine Bedienperson schafft.

Erfindungsgemäß wird die Aufgabe durch einen Lenkkopf mit den Merkmalen aus Anspruch 1 gelöst. Vorteilhafte Ausgestaltungen bilden den Gegenstand der Unteransprüche.

Der erfindungsgemäße Lenkkopf ist vorgesehen und bestimmt für einen drehbaren Lenkwinkelgeber an einem Flurförderzeug. Der erfindungsgemäße Lenkkopf besitzt eine Lenkwelle, eine Ausgangswelle und eine Lagereinheit. Die Lenkwelle ist vorgesehen, um eine Verbindung mit einem lenkbaren Lenkwinkelgeber herzustellen. Die Ausgangswelle des Lenkkopfs ist vorgesehen, um eine Verbindung mit einer eine Drehbewegung erfassenden Sensorik herzustellen. Die erfindungsgemäß vorgesehene Lagereinheit besitzt zwei in O-Form zueinander angeordnete Lagerreihen, von denen eine mit der Lenkwelle und eine mit der Ausgangswelle zusammenwirkt. Lenk- und Ausgangswelle sind mit Mitteln versehen, um diese gegeneinander mit einer vordefinierten Kraft gegen die Lagerreihen zu verspannen. Durch das Verspannen entsteht das Lenkmoment in der gewünschten Größe. Dieses einer Drehbewegung entgegengesetzte Lenkmoment an dem erfindungsgemäßen Lenkkopf wird durch ein Verspannen zwischen Lenk- und Ausgangswelle erzielt und ist daher von Bauteiltoleranzen und Verschleiß unabhängig.

In einer bevorzugten Ausgestaltung sind die Mittel an Lenk- und Ausgangswelle ein Innen- und ein Außengewinde, durch deren Verschraubung die Kraft auf die Lagereinheit mit ihren Lagerreihen einstellbar ist. Der besondere Vorteil an der Verschraubung von Lenk- und Ausgangswelle liegt darin, dass sich ein definiertes Drehmoment und damit eine definierte Vorspannung auf die Lagerreihen erzeugen lassen. Hierdurch kann das für den Lenkwinkelgeber vorgesehene Lenkmoment in einfacher Weise definiert und eingestellt werden.

In einer bevorzugten Ausgestaltung ist die ein Außengewinde aufweisende Welle mit einer zentralen Bohrung und mit einem Gewindestift zur Anordnung in der zentralen Bohrung und einem Verspannen zwischen Ausgangswelle und Lenkwelle relativ zueinander vorgesehen. Der in der zentralen Bohrung angeordnete Gewindestift sichert die Schraubverbindung zwischen Ausgangswelle und Lenkwelle und stellt ein konstantes Lenkmoment sicher.

In einer bevorzugten Weiterbildung besitzen Lenkwelle und Ausgangswelle jeweils eine Schulter, die jeweils eine Laufbahn für die Lagerreihe mit ihren Wälzkörpern bildet. Die Laufbahnen sind jeweils parallel zu den Laufbahnen der Lagereinheit. Durch ein Verschrauben zwischen Lenkwelle und Ausgangswelle werden die Laufbahnen in axialer Richtung aufeinander zu bewegt und erhöhen so das einer Drehbewegung entgegenstehende Moment der Lagerreihen.

In einer bevorzugten Ausgestaltung besitzen die Schultern jeweils an ihrem Ende einen vorstehenden Ring, der sich axial nach innen über die Wälzkörper erstreckt. Der zwischen Laufbahnen gebildete Wälzspalt wird durch den nach innen vorstehenden Ring überdeckt und kann bevorzugt über eine Dichtung abgedichtet werden.

In einer bevorzugten Weitergestaltung besitzt die Ausgangswelle eine zentrale Aufnahme für eine Sensorwelle, die mit einer Sensorik verbunden ist. Die Sensorwelle nimmt die Drehbewegung der Ausgangswelle auf und leitet diese an die Sensorik weiter, von wo aus dann eine entsprechende Ansteuerung des oder der gelenkten Räder erfolgt.

In einer bevorzugten Ausgestaltung besitzt die Ausgangswelle eine mit einem Innengewinde versehene Querbohrung zur Aufnahme eines Gewindestifts. Der in die Ausgangswelle eingesetzte Gewindestift sichert eine Verbindung mit der Sensorwelle, damit die Sensorik auch bei Erschütterungen nicht die Verbindung verliert.

In einer bevorzugten Ausgestaltung besitzt die Lagereinheit einen zentralen Lagerkörper mit zwei Laufbahnen. Die Laufbahnen sind gegeneinander verwinkelt, so dass die normalen Richtungen auf der Laufbahn voneinander fortweist, um eine O-Anordnung des Lagers zu bilden.

In einer bevorzugten Ausgestaltung ist der zentrale Lagerkörper mit seinen beiden Laufbahnen einstückig ausgebildet.

Ein bevorzugtes Ausführungsbeispiel des erfindungsgemäßen Lenkkopfs wird nachfolgend näher erläutert. Es zeigen:
- Fig. 1: in einer schematischen Ansicht ein Flurförderzeug mit einer elektrischen Lenkung und
- Fig. 2: einen schematischen Querschnitt durch den erfindungsgemäßen Lenkkopf.

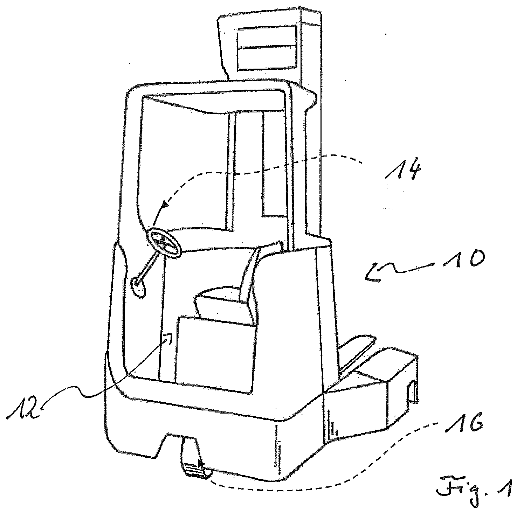

Fig. 1 zeigt einen Schubmaststapler 10 mit einer Fahrerkabine 12, in der ein Lenkrad 14 angeordnet ist. Über das Lenkrad 14 wird das gelenkte und angetriebene Rad 16 ausgerichtet. Das dargestellte Flurförderzeug ist mit einer elektrischen Lenkung ausgestattet. Bei einer elektrischen Lenkung wird eine Drehbewegung des Lenkrades 14 elektrisch abgegriffen und als eine entsprechende Sollwertvorgabe an eine Lenksteuerung elektrisch übertragen. Die Lenksteuerung ermittelt, beispielsweise abhängig von der Ist-Stellung des oder der gelenkten Räder 16, ein Signal zur Ansteuerung des Rades 16.

Bei der elektrischen Lenkung fehlt an dem Lenkrad eine mechanische Rückmeldung über die Bewegung des gelenkten Rades. Unabhängig von der Bewegung des gelenkten Rades wird an dem Lenkkopf einer elektrischen Lenkung ein Lenkmoment erzeugt. Das Lenkmoment ist das einer Drehung des Lenkrades oder des Lenkwinkelgebers entgegenwirkende Moment. Das Lenkmoment stellt beispielsweise sicher, dass ein mit einem Knauf versehenes Lenkrad in seiner Position verbleibt und sich nicht stets in eine Position dreht, in der der Lenkknauf nach unten zeigt. Hinzu kommt, dass das Lenkmoment von einem Fahrer sehr genau wahrgenommen wird, beispielsweise wenn das Flurförderzeug mit sehr feinen Lenkbewegungen genau angesteuert wird.

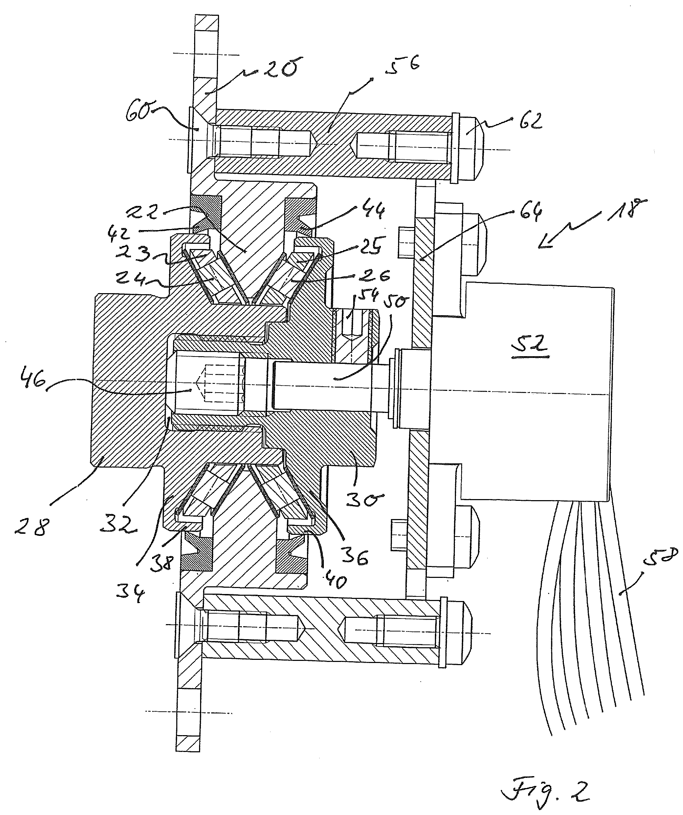

Fig. 2 zeigt einen Schnitt durch einen erfindungsgemäßen Lenkkopf 18. Der Lenkkopf 18 besitzt eine Grundplatte 20, an der ein zentraler Lagerkörper 22 einstückig ausgebildet ist. Der umlaufende Lagerkörper 22 besitzt auf seinen beiden Seiten jeweils umlaufende Laufbahnen für in Käfigen 23 und 25 angeordnete Wälzkörper 24 und 26. Der zentrale Lagerkörper 22 besitzt eine radial nach innen vorstehende Spitze, so dass die Laufbahnen für die Wälzkörper 24 und 26 einen spitzen Winkel miteinander einschließen und so eine O-Konfiguration für das gebildete Stützlager bereitstellen.

An dem zentralen Lagerkörper 22 gelagert sind eine Lenkwelle 28 und eine Ausgangswelle 30. Die Lenkwelle 28 besitzt zentral eine Aufnahme 32 mit einem Innengewinde, in das ein vorstehender Abschnitt der Ausgangswelle 30 mit seinem Außengewinde eingeschraubt ist. Ausgangswelle 30 und Lenkwelle 28 besitzen jeweils eine radial nach außen weisende und umlaufende Schulter 34, 36. Die Schultern 34 und 36 besitzen jeweils eine an den zentralen Lagerkörper angepasste Neigung. Durch ein Verschrauben von Ausgangswelle 30 und Lenkwelle 28 gegeneinander, wird der Abstand zwischen den Schultern 34 und 36 verringert, so dass die Kraft auf die Wälzkörper 24 und 26 vergrößert wird. Hierdurch entsteht ein durch die Verschraubung einstellbares Lenkmoment, das im Wesentlichen durch die Kraft auf die Wälzkörper 24 und 26 bestimmt ist.

Jede der Schultern 34, 36 besitzt einen den Wälzkörper überdeckenden Ring 38, 40. Die Ringe sind jeweils über eine Lippendichtung 42, 44 gegenüber dem feststehenden Lagerkörper 22 abgedichtet.

Um die Schraubverbindung zwischen Lenkwelle 28 und Ausgangswelle 30 zu sichern, ist ein zentraler Gewindestift 46 vorgesehen. Der Gewindestift 46 ist zentral in die Ausgangswelle geschraubt, die wiederum in der Aufnahme 32 der Lenkwelle 28 anliegt.

Die Drehbewegung der Ausgangswelle 30 wird mit Hilfe einer Sensorwelle 50 auf einen Sensor 52 übertragen. Die Sensorwelle 50 kann beispielsweise durch einen nicht runden Querschnitt mitdrehend in der Ausgangswelle 30 angeordnet sein. Gesichert wird die Sensorwelle 50 über einen Sicherungsstift 54, der in radialer Richtung in die Ausgangswelle 30 eingeschraubt ist. Die Sensorik 52 erfasst die Drehbewegung und gibt entsprechende Steuersignale über Leitungen 58 an einen nicht mehr dargestellten Steckverbinder aus.

Die Sensorik 52 ist verdrehsicher an der Grundplatte 20 über Stege 56 gehalten. Die Stege 56 sind jeweils über eine Schraube 60, 62 verschraubt. Die Schraube 62 trägt eine Platte 64 mit der Sensorik 52.

Im Gebrauch des erfindungsgemäßen Lenkkopfs 18 ist die Lenkwelle 28 direkt oder indirekt mit dem Lenkrad 14 verbunden. Eine Drehbewegung der Lenkwelle 28 wird eins zu eins auf die Ausgangswelle 30 übertragen. Der hierbei zu überwindende Widerstand in Form eines Lenkmoments ist durch den Grad der Verschraubung von Lenkwelle und Ausgangswelle festgelegt. Die Drehbewegung der Ausgangswelle 30 wird über eine Sensorwelle 50 an eine Sensorik 52 übertragen, wo der Lenkwinkel erfasst und über einen Steckverbinder 58 an eine Lenksteuerung weitergeleitet.

### Bezugszeichenliste

- 10: Schubmaststapler
- 12: Fahrerkabine
- 14: Lenkrad
- 16: Rad
- 18: Lenkkopf
- 20: Grundplatte
- 22: Lagerkörper
- 23: Käfig
- 24: Wälzkörper
- 25: Käfig
- 26: Wälzkörper
- 28: Lenkwelle
- 30: Ausgangswelle
- 32: Aufnahme
- 34: Schulter
- 36: Schulter
- 38: Ring
- 40: Ring
- 42: Lippendichtung
- 44: Lippendichtung
- 46: Gewindestift
- 50: Sensorwelle
- 52: Sensor
- 54: Sicherungsstift
- 56: Stege
- 58: Leitungen
- 60: Schraube
- 62: Schraube
- 64: Platte

## Patentansprüche

1. Lenkkopf (18) für einen drehbaren Lenkwinkelgeber an einem Flurförderzeug (10) mit einer Lenkwelle (28), die zur Verbindung mit dem Lenkwinkelgeber vorgesehen ist,
**dadurch gekennzeichnet, dass**
eine Ausgangswelle (30), die zu einer Verbindung mit einer eine Drehbewegung erfassenden Sensorik (52) vorgesehen ist, und eine Lagereinheit (22, 24, 26) vorgesehen ist, die zwei in O-Form zueinander angeordnete Lagerreihen aufweist, von denen eine mit der Lenkwelle (28) und eine mit der Ausgangswelle (30) zusammenwirkt, wobei Mittel an Lenk- und Ausgangswelle vorgesehen sind, um Lenk- und Ausgangswelle gegeneinander mit einer vordefinierten Kraft gegen die Lagereinheit zu verspannen.

2. Lenkkopf nach Anspruch 1, **dadurch gekennzeichnet, dass** die Mittel an Lenk- und Ausgangswelle (28, 30) ein Innen- und ein Außengewinde aufweisen, durch deren Verschraubung die Kraft auf die Lagereinheit einstellbar ist.

3. Lenkkopf nach Anspruch 2, **dadurch gekennzeichnet, dass** die ein Außengewinde aufweisende Welle (28, 30) eine zentrale Bohrung mit einem Innengewindestift zum Verspannen von Ausgangswelle (30) und Lenkwelle (28) relativ zueinander besitzt.

4. Lenkkopf nach einem der Ansprüche 1 bis 3, **dadurch gekennzeichnet, dass** Lenk- und Ausgangswelle (28, 30) jeweils eine Schulter (34, 36) aufweisen, die eine Laufbahn für die Lagereinheit bildet.

5. Lenkkopf nach einem der Ansprüche 1 bis 4, **dadurch gekennzeichnet, dass** die Schultern (34, 36) jeweils an ihrem Ende einen vorstehenden Ring (38, 40) besitzen, der sich axial nach innen über die Wälzkörper (26) erstreckt.

6. Lenkkopf nach Anspruch 5, **dadurch gekennzeichnet, dass** radial außenliegend eine Dichtung (42, 44) auf dem Ring angeordnet ist.

7. Lenkkopf nach einem der Ansprüche 1 bis 6, **dadurch gekennzeichnet, dass** die Ausgangswelle (30) eine zentrale Aufnahme für eine Sensorwelle (50) der Sensorik (52) aufweist.

8. Lenkkopf nach Anspruch 7, **dadurch gekennzeichnet, dass** die Ausgangswelle (30) eine mit Innengewinde versehene Querbohrung zur Aufnahme eines Gewindestifts (54) aufweist.

9. Lenkkopf nach einem der Ansprüche 1 bis 8, **dadurch gekennzeichnet, dass** die Lagereinheit einen zentralen Lagerkörper (22) mit zwei Laufbahnen besitzt.

10. Lenkkopf nach Anspruch 9, **dadurch gekennzeichnet, dass** der zentrale Lagerkörper (22) einstückig ausgebildet ist.

## Claims

1. A steering head (18) for a rotary steering angle sensor on an industrial truck (10) having a steering shaft (28) which is provided for connection to the steering angle sensor,
**characterised in that**
an output shaft (30) is provided for a connection to a sensor system (52) for capturing a rotational movement, and a bearing unit (22, 24, 26) is provided which has two bearing rows arranged in O-shape with respect to each other, from which one cooperates with the steering shaft (28) and one with the output shaft (30), wherein means are provided on the steering- and the output shaft in order to tension the steering- and the output shaft against each other against the bearing unit with a predefined force.

2. The steering head according to claim 1, **characterised in that** the means on the steering- and the output shaft (28, 30) have an inner and an outer thread, by screwing of which the force onto the bearing unit can be adjusted.

3. The steering head according to claim 2, **characterised in that** the shaft (28, 30) comprising an outer thread has a central bore with an internally threaded pin for tensioning output shaft (30) and steering shaft (28) in relation to each other.

4. A steering head according to one of the claims 1 to 3, **characterised in that** the steering- and the output shaft (28, 30) each have a shoulder (34, 36), which forms a raceway for the bearing unit.

5. A steering head according to one of the claims 1 to 4, **characterised in that** the shoulders (34, 36) each have a projecting ring (38, 40) on their end, which extends axially towards the inside across the roller bearings (26).

6. The steering head according to claim 5, **characterised in that** a seal (42, 44) is radially arranged on the ring on the outer side thereof.

7. A steering head according to one of the claims 1 to 6, **characterised in that** the output shaft (30) has a central seat for a sensor shaft (50) of the sensor system (52).

8. The steering head according to claim 7, **characterised in that** the output shaft (30) has a crosswise bore provided with an internal thread for accommodating a threaded pin (54).

9. A steering head according to one of the claims 1 to 8, **characterised in that** the bearing unit has a central bearing body (22) with two raceways.

10. The steering head according to claim 9, **characterised in that** the central bearing body (22) is realised in one piece.

## Revendications

1. Tête de direction (18) pour un capteur d'angle de direction rotatif sur un chariot de manutention (10) avec un arbre de direction (28) qui est prévu pour la liaison au capteur d'angle de direction,
**caractérisée en ce que**
un arbre de sortie (30) est prévu pour la liaison à un système sensoriel (52) détectant une mouvement rotatif, et une unité de palier (22, 24, 26) est prévue qui a deux séries de roulements arrangées l'une par rapport à l'autre en forme d'O, dont une coopère avec l'arbre de direction (28) et une avec l'arbre de sortie (30), des moyens étant prévus sur l'arbre de direction et l'arbre de sortie afin de mettre l'arbre de direction et l'arbre de sortie sous contrainte contre l'unité de palier avec une force prédéfinie.

2. Tête de direction selon la revendication 1, **caractérisée en ce que** les moyens sur l'arbre de direction et l'arbre de sortie (28, 30) ont un filetage intérieur et un filetage extérieur, par vissage desquels la force agissant sur l'unité de palier est ajustable.

3. Tête de direction selon la revendication 2, **caractérisée en ce que** l'arbre (28, 30) comportant un filetage extérieur a un perçage central avec une tige à filetage intérieur pour mettre l'arbre de sortie (30) et l'arbre de direction (28) mutuellement sous contrainte.

4. Tête de direction selon une des revendications 1 à 3, **caractérisée en ce que** l'arbre de direction et l'arbre de sortie (28, 30) ont chacun une épaule (34, 36) qui forme une voie de roulement pour l'unité de palier.

5. Tête de direction selon une des revendications 1 à 4, **caractérisée en ce que** les épaules (34, 36) ont chacune une bague qui projette (38, 40) sur leurs extrémités et qui s'étend axialement vers l'intérieur à travers les corps de roulement (26).

6. Tête de direction selon la revendication 5, **caractérisée en ce que** un joint d'étanchéité (42, 44) est radialement arrangé sur la bague au coté extérieur.

7. Tête de direction selon une des revendications 1 à 6, **caractérisée en ce que** l'arbre de sortie (30) a un logement central pour un arbre de capteur (50) du système sensoriel (52).

8. Tête de direction selon la revendication 7, **caractérisée en ce que** l'arbre de sortie (30) comporte un trou transversal prévu d'un filetage intérieur pour loger une tige filetée (54).

9. Tête de direction selon une des revendications 1 à 8, **caractérisée en ce que** l'unité de palier a un corps de palier central (22) avec deux voies de roulement.

10. Tête de direction selon la revendication 9, **caractérisée en ce que** le corps de palier central (22) est fait d'une seule pièce.
